# EUROPEAN PATENT SPECIFICATION

(11) **EP 0 368 242 B1**
(45) Date of publication and mention of the grant of the patent: **08.11.1995**
(21) Application number: 89120594.0
(22) Date of filing: 07.11.1989
(51) Int. Cl.: G11B 7/12, G11B 33/14, G11B 23/50, G11B 7/085, G11B 17/04

(54) **An optical disk apparatus**
Gerät für optische Scheiben
Appareil à disques optiques

(30) Priority: 11.11.1988 JP 283612/88
(43) Date of publication of application: 16.05.1990
(73) Proprietor: HITACHI, LTD., Chiyoda-ku, Tokyo 100 (JP)
(72) Inventor: Ohiso, Kazumasa, Totsuka-ku Yokohama-shi (JP); Satake, Mitsuo, Totsuka-ku Yokohama-shi (JP); Ikuma, Akira, Hiratsuka-shi (JP); Mori, Sigeki, Totsuka-ku Yokohama-shi (JP); Hirata, Tomoki, Totsuka-ku Yokohama-shi (JP); Usami, Shinichi, Totsuka-ku Yokohama-shi (JP); Enoki, Takashi, Totsuka-ku Yokohama-shi (JP); Baba, Tatsuo, Totsuka-ku Yokohama-shi (JP)
(74) Representative: Altenburg, Udo, Dipl.-Phys.

(56) References cited:
- PATENT ABSTRACTS OF JAPAN vol. 12, no. 327 (P-753)(3174) 06 September 1988, & JP-A- 63 090036 (CANON INC) 20 April 1988,
- PATENT ABSTRACTS OF JAPAN vol. 13, no. 7 (P-810)(3355) 10 January 1989, & JP-A- 63 214933 (MATSUSHITA GRAPHIC COMMUN SYST INC) 07 September 1988,
- PATENT ABSTRACTS OF JAPAN vol. 11, no. 203 (P-591)(2650) 02 July 1987
- PATENT ABSTRACTS OF JAPAN vol. 11, no. 97 (P-560)(2544) 26 March 1987, & JP-A- 61 248242 (NEC CORP) 05 November 1986,
- PATENT ABSTRACTS OF JAPAN vol. 10, no. 160 (P-465)(2216) 07 June 1986, & JP-A- 61 013449 (MATSUSHITA DENKI SANGYO K.K.) 21 January 1986,
- PATENT ABSTRACTS OF JAPAN vol. 10, no. 284 (P-501)(2340) 26 September 1986, & JP-A- 61 104341 (MITSUBISHI ELECTRIC CORP.) 22 May 1986,
- PATENT ABSTRACTS OF JAPAN vol. 11, no. 40 (P-544)(2487) 05 February 1987, & JP-A- 61 210533 (OLYMPUS OPTICAL CO LTD) 18 September 1986,

## Description

### FIELD OF THE INVENTION AND RELATED ART STATEMENT

The present invention relates to an optical disk apparatus, and more particularly to an optical disk apparatus provided with a mechanism for preventing dust from being accumulated on an optical pickup system and/or for removing dust accumulated from the optical pickup system.

A conventional apparatus with the dust prevention function is one with a shutter provided in a disk insert mouth, or one with a dust cover disposed between an objective of the pickup system and a disk.

On the other hand, a conventional apparatus with the dust removal function is one with a brush attached to a rotative disk, or one with a brush driven corresponding to a mounting operation of the disk into the apparatus. These apparatus are disclosed in, for example, JP-A-62-24449 and JP-A-63-52339.

In the apparatus disclosed in JP-A-62024449 a disk is loaded in a tray. In relation with a carry-in operation a cleaning arm on which a brush is attached is moved by the tray and the brush is moved to rub an objective lens.

However, the conventional apparatus fails to consider damage of the objective of the pickup system due to frequent dust removal operations and to positively remove dust prior to generation of any apparatus trouble due to accumulation of dust on the pickup system. According this, in case that such conventional apparatus is used outdoors or in a place people frequents, the dust is accumulated on the objective for several months to become impossible to read the signal stored on the optical disk.

JP-A-63090036 discloses an optical information recording and reproducing device wherein when the level of a reflection factor previously recorded on the disk is dropped at the time of its reading and any trouble is generated at the time of recording/reproducing the objective lens in brought into contact with a brush so as to remove a foreign substance.

### OBJECT AND SUMMARY OF THE INVENTION

Accordingly, an object of the present invention is to provide an optical disk apparatus which can automatically remove dust accumulated on the pickup system without damaging the objective serious before a signal read out becomes impractical.

To this end, according to one aspect of the present invention, the optical disk apparatus comprises a mechanism for provide the brush and the objective with a relative movement therebetween.

Further, according to another aspect of the present invention, the optical disk apparatus comprises means for monitoring a level of signal read out by a pickup, and means for controlling the mechanism for providing the brush and the objective with a relative movement therebetween on the basis of the read-out signal level.

The invention is specified in the claim.

According to the present invention, it becomes possible to remove dust accumulated on the pickup system before a signal read out becomes impractical, and further to suppress the damage of the objective.

Another objects, features and meritous advantages of the present invention will be apparent from the following description of the preferred embodiments described with referring to the accompanying drawings.

### BRIEF DESCRIPTION OF THE DRAWINGS

Fig. 1 is a perspective view showing an optical disk apparatus according to one embodiment of the present invention, on the disk mounting position,
Fig. 2 is a perspective view showing the apparatus shown in Fig. 1, on the brush operation,
Fig. 3 is a fragmental sectional view showing a front portion of the apparatus shown in Fig. 1, on the disk insertion,
Fig. 4 is a fragmental sectional view showing a rear portion of the apparatus shown in Fig. 1, on the disk mounting,
Fig. 5 is a sectional view showing a dust removal operation by means of the brush,
Figs. 6A and 6B are graphs showing levels of EFM signal before and after accumulation of dust, respectively,
Fig. 7 is a fragmental sectional view showing dust accumulated on the objective,
Figs. 8 and 9 are bottom views showing cartridge on the cartridge insertion and on the completion of the cartridge insertion,
Fig. 10 is a diagram showing the relation between the pickup output level and the time lapse,
Fig. 11 is a flow chart of the dust removal operation,
Fig. 12 is a block diagram showing the arrangement of the another embodiment of the present invention,
Fig. 13 is a sectional view taken along the line XIII-XIII of Fig. 1 showing a pickup in detail,
Fig. 14 is a view showing the dust removal operation, and
Fig. 15 is a perspective view showing a relative movement mechanism in an apparatus according to further embodiment.

### DETAILED DESCRIPTION OF THE PREFERRED EMBODIMENTS

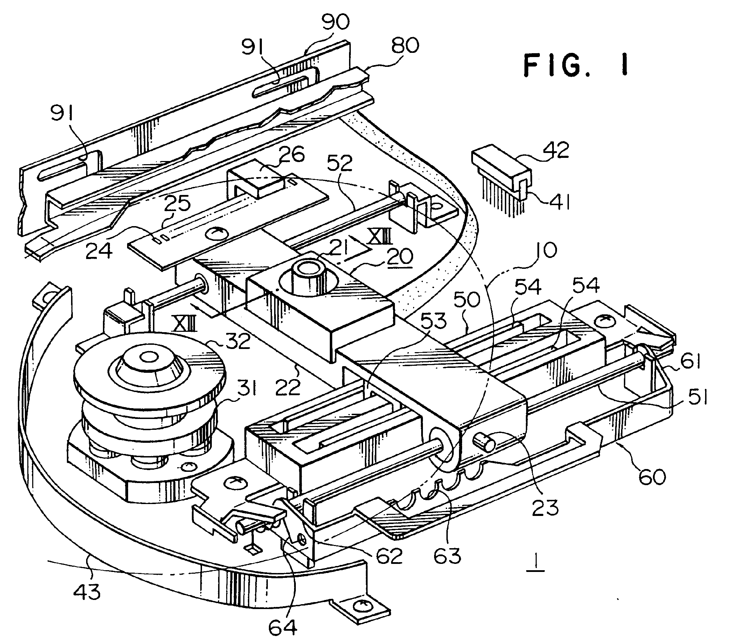

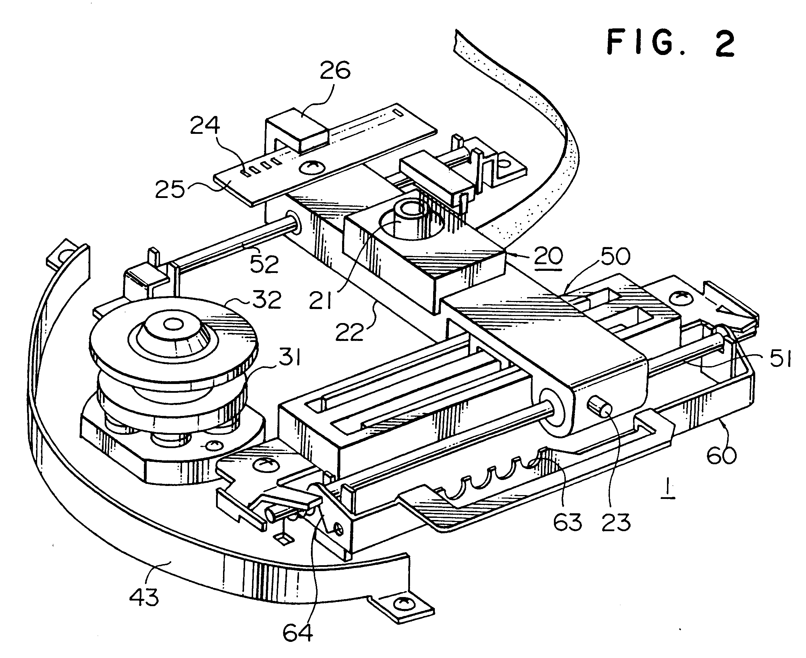

Referring to Figs. 1 and 2, CD-ROM driving apparatus 1 to which an embodiment of the present embodiment is applied reads information stored on an optical disk 10 which is rotated by a disk driving motor 31 by means of an optical pickup 20. The optical pickup 20 is slidable in a radial direction of the disk 10, and includes an objective 21 and a pickup base 22 on which the objective 21 is mounted. Since information is stored on the disk 10 from an inner periphery thereof to an outer periphery thereof in order, the pickup 20 is normally positioned adjacent a turn table 32 on which the disk 10 is to be mounted, in a waiting position. A brush 41 fitted into a brush holder 42 is positioned apart from the turn table 32 enough to prevent the brush from interfering with the rotation of the disk 10. On reading out of information, namely on the working operation of the apparatus, the optical pickup 20 is guided at the pickup base 22 by means of guide bars 51 and 52, and is moved radial outwards below the disk 10 by means of a pickup driving linear motor 50 which is composed of an armature 53 attached to the pickup base 22 and field members 54 and 54.

The driving apparatus 1 further comprises a locking member 60 which is punched out from a metal plate and bent into a C letter shape. The locking member 60 is rotatably mounted at opposite bent ends 61 and 62 to the guide bar 51. The locking member 60 is provided at a side edge thereof with a row of recesses 63 which is engageable with a projection 23 projecting from the pickup base 22. The locking member 60 is normally urged by a spring 64 so as to engage at the recess 63 with the projection 23.

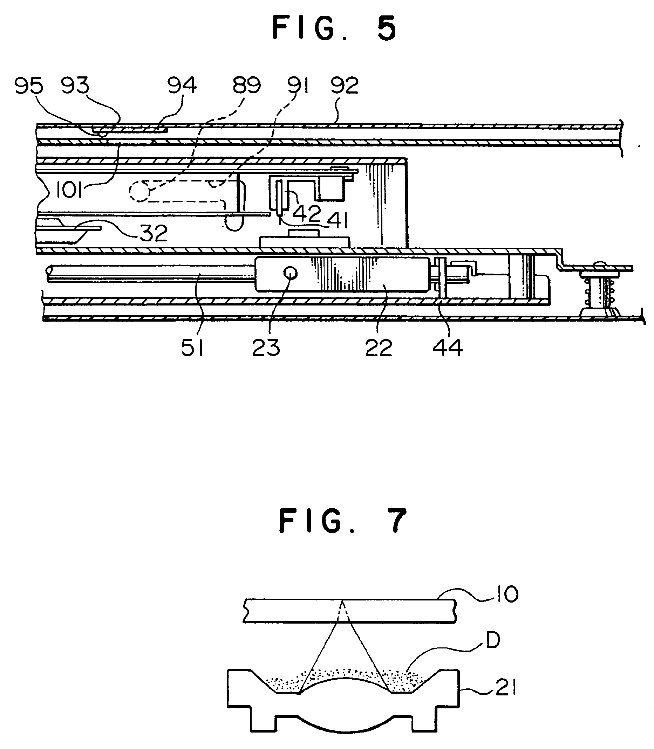

The operation of the above apparatus will be explained hereinunder with referring to Figs. 1, 3-5 and 8-9.

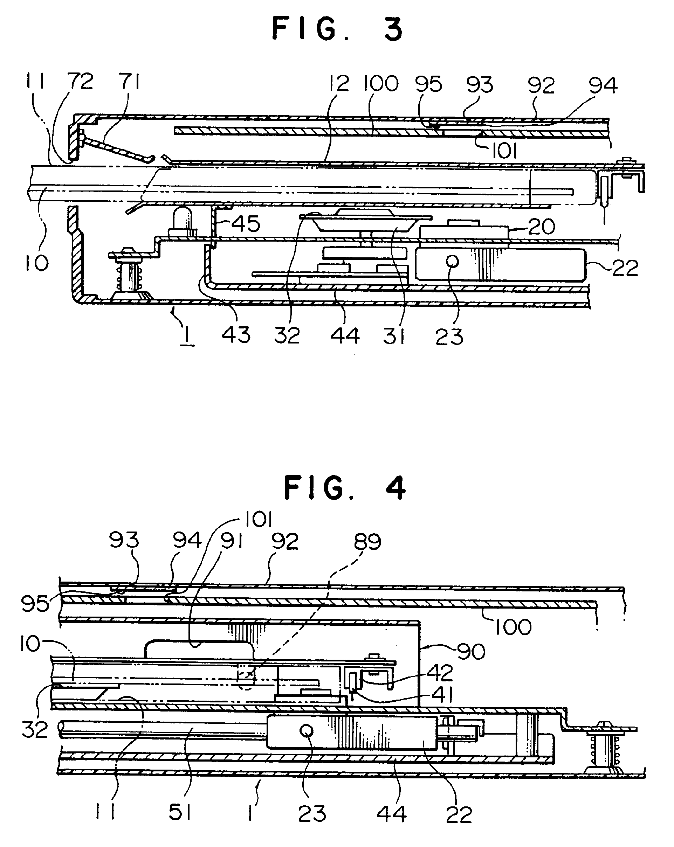

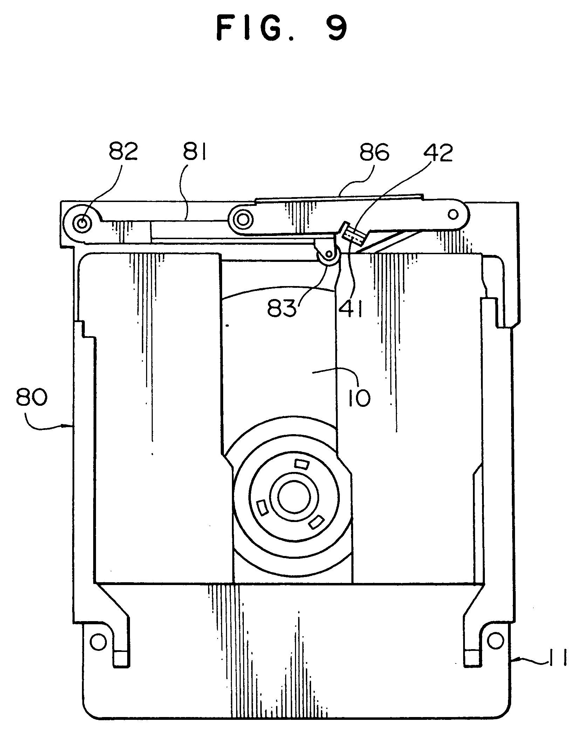

At first, a cartridge 11 housing the disk therein pushes a door 71 pivotally mounted to open and close an insertion/ejection opening 72 formed on a front panel of the apparatus 1, and is inserted into the apparatus 1 (Fig. 3). The cartridge 11 is held at opposite sides thereof by opposite bent portions (only one is shown in Fig. 1) of a guide 80. The guide 80 is provided with a shutter lever 81 which is pivotable around a pivot 82 (Fig. 8). A roller 83 is provided at a free end of the shutter lever 81, which roller is rotatable round a bar 84. The roller 83 comes into contact with a shutter 12 which is provided in the cartridge 11 and permits the disk 10 to be exposed. When the cartridge 11 is further inserted into the apparatus 1, the bar 84 is moved along an arc slit 85 according to the movement of the cartridge 11 and then the shutter lever 81 pivots around the pivot 82. According this, the shutter 12 is opened. Simultaneous with this, an arm member 86 rotatable around a shaft 87, which is linked with the shutter lever 81, is guided by a guide slit 88 and moved rearwards. When the cartridge 11 is completely inserted into the apparatus 1 (Fig. 9), the shutter 12 of the cartridge 11 is fully opened and then the disk 10 in the cartridge is exposed. At this moment, the brush holder 42 is positioned apart from the cartridge 11, which is attached to the arm member 86, thereby there is no fear that the brush 41 interferes with the pickup 20.

When the guide 80 is moved together with the cartridge 11, projections 89 projecting from the guide 80 are guided by means of L-shaped slits 91 formed in a side wall 90, so that the guide 80 once moves horizontally and then descends. According to this, the disk 10 in the cartridge 11 is mounted on the turn table 32, simultaneously the locking member 60 is swung counterclockwise against a spring force of the spring 64 to release the pickup 20 so as to be slidable. The cartridge 11 is provided with a disk clamp (not shown) by which the disk can rotate on the turn table 32 without any slip there between on the rotation of the turn table 32 due to a disk driving motor 31.

On the read-out operation, the pickup 20 is radially moved below the rotating disk 10 by means of the pickup driving linear motor 50 so that it read out the information stored on the disk 10. A circuit on a circuit substrate 100 process the information read out by the pickup 20 and outputs an eight to fourteen modulation signal (EFM signals) on the basis of such read-out information.

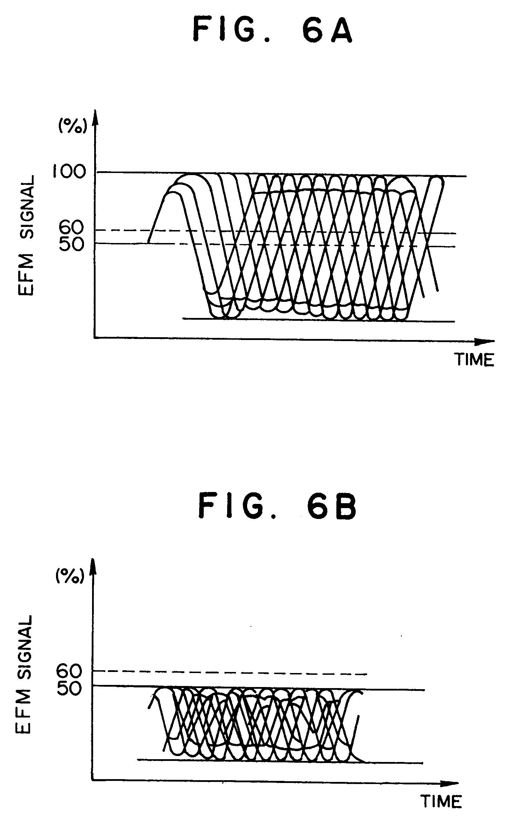

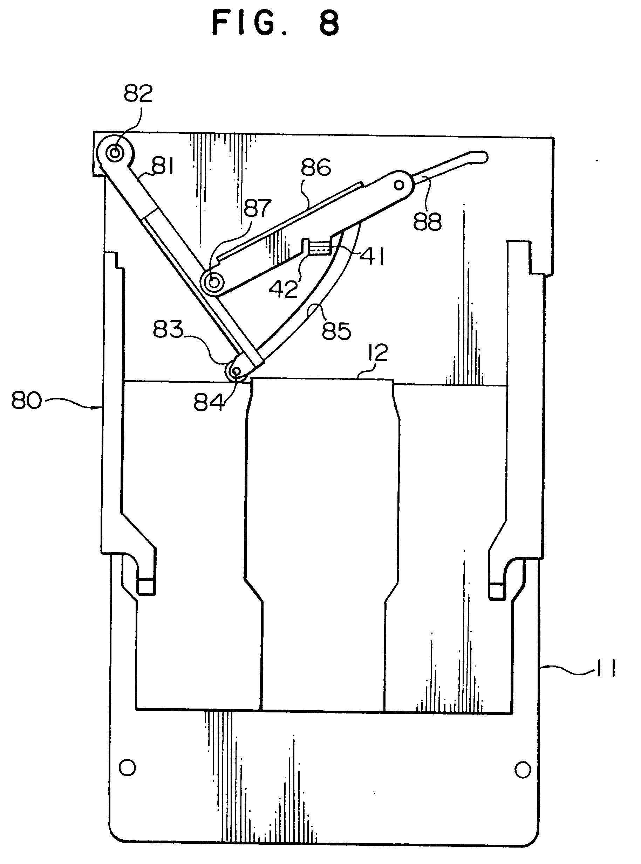

If dust D is accumulated on the objective 21 as shown in Fig. 7, an intensity of irradiation light from the pickup 20 deteriorates and then an intensity of reflection light from the disk 10 is further deteriorated. Namely, an EFM signal with an original amplitude shown in Fig. 6A is changed into one with a damped amplitude shown in Fig. 6B. If the amplitude is damped or decreased below or to 50% of the original one, it becomes impossible to read information on the disk. This embodiment, therefore, employs a reference value Re which is, for example, 60% somewhat larger than a damping ratio Rc at which read-out of information becomes impossible, for example 50%. An actual damping of the amplitude of the EFM signal is continuously monitored and a control circuit on the circuit substrate 100 compares the monitored damping ratio with the reference value Re. In case that the monitored damping ratio becomes smaller than the reference value Re, the control circuit on the circuit substrate 100 operates to drive the pickup driving linear motor 50 so as to move the pickup 20 apart from the turn table 32, and simultaneously the cartridge 11 is moved towards the insertion/ejection opening 72. Therefore, the shutter lever 81 and the arm member 86 pivot to place the brush holder 42 and the brush 41 between the pickup 20 and the turn table 32. Thereafter, the direction of current to be supplied to the pickup driving linear motor 50 is changed alternately to reciprocate the pickup 20 with respect to the brush 41. The relative movement between the pickup 20 and the brush 41 removes dust accumulated on the objective 21. According to this, the intensity of irradiation light from the pickup 20 is recovered and then an intensity of reflection light from the disk 10 is also recovered.

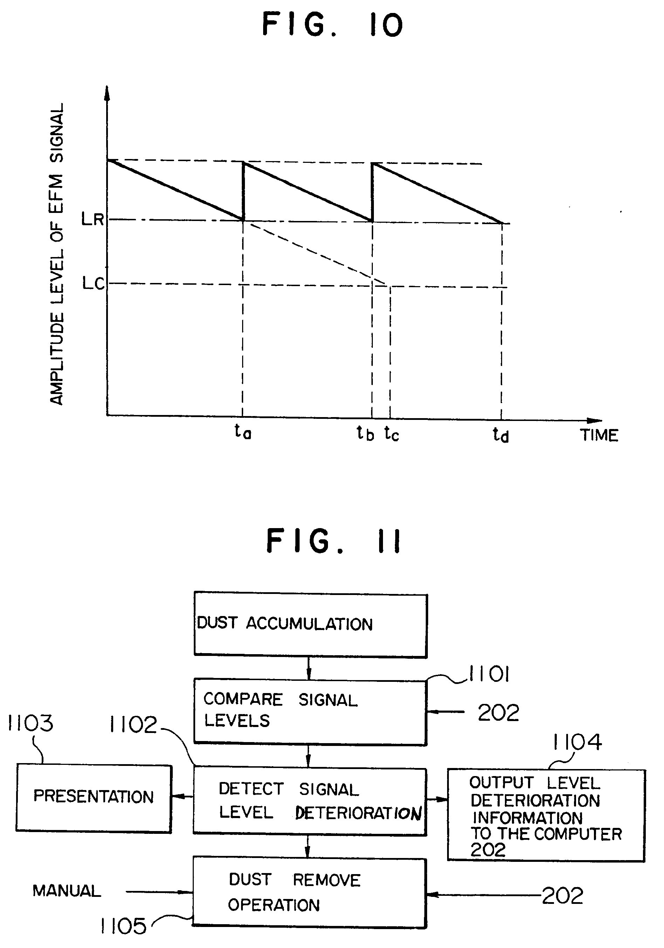

Namely, as shown in Fig. 10, the amplitude level of the EFM signal is decreased in accordance with the time lapse. The level finally decreased to a read-out impossible level Lc at time tc, as shown in a broken line. On the contrary, according to this embodiment, in case that the amplitude level of the EFM signal is decreased to a reference level Lr which is somewhat higher than the read-out impossible level Lc, the above-mentioned dust removal operation is carried out (time ta). Accordingly, the amplitude level of the EFM signal is returned into an original level. And these processes are repeated every time the amplitude level of the EFM signal is decreased in the reference level Lr (time tb, td, ... ).

Incidentally, an optical sensor 26 detects a row of slits 24 formed on a scale plate 25 so as to control a sliding stroke of the optical pickup 20 on the dust removal operation. The sliding speed of the optical pickup 20 is controlled by changing a magnitude of current to be supplied into the pickup driving linear motor 50.

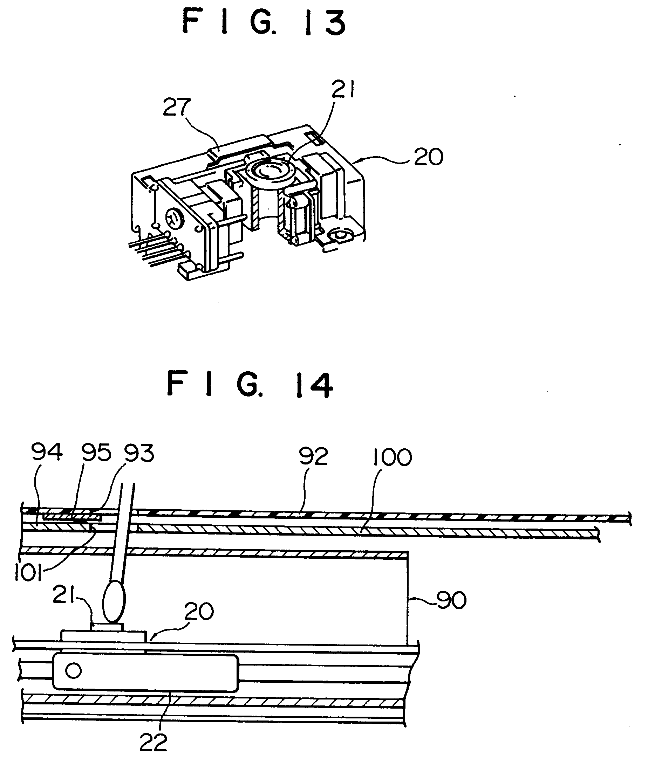

In this embodiment, in order to improve the dust removal effect, the pickup 20 is raised by an objective focusing drive means 27 (Fig. 13) on the dust removal operation. According to this, the brush and the objective are engaged closer to each other, thereby improving the dust removal effect.

Furthermore, in this embodiment, in order to prevent the dust from being accumulated on the objective, a dust wall 43 is disposed between the disk driving motor 31 and the insertion/ejection opening 72. The dust wall 43 deflects air containing therein dust from the insertion/ejection opening 72 to the pickup 20, thereby such air flows apart from the pickup 20. The dust wall 43 may be integrally formed in a base plate 44 on which the pickup 20 is mounted (Fig. 3). Also, another dust wall 45 may be so provided that it depends from the guide 12 so as to partially overlap with the dust wall 43. The dust wall 45 may be made of metal or sponge.

In order to further improve the dust prevention, according to this embodiment, an opening 93 is provided in a flame 92 of the apparatus 1. The opening 93 is opened and closed by a plate 94 rotatable around a shaft 95. A member disposed between the flame 92 and the pickup 20, for example the circuit substrate 100, is provided at a portion thereof corresponding to the opening 93 with an opening 101 which aligns with the opening 93. Accordingly in case that the objective is so positioned that these openings 93 and 101 are aligned to each other, an operator can manually remove dust on the objective 21 by means of an applicator or the like, which cannot be removed by the brush and then remained (Fig. 14).

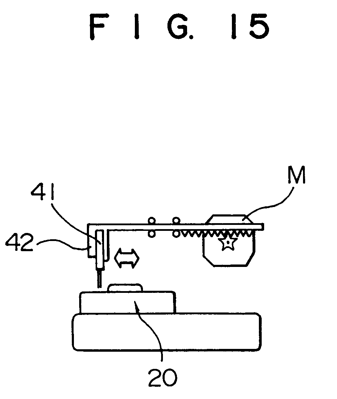

As described in other embodiment shown in Fig. 15, a relative movement between the optical pickup 20 and the brush 41 may be carried out by reciprocating the brush 41 with respect to a stationary optical pickup 20 by means of motor means M, instead of reciprocating the optical pickup 20.

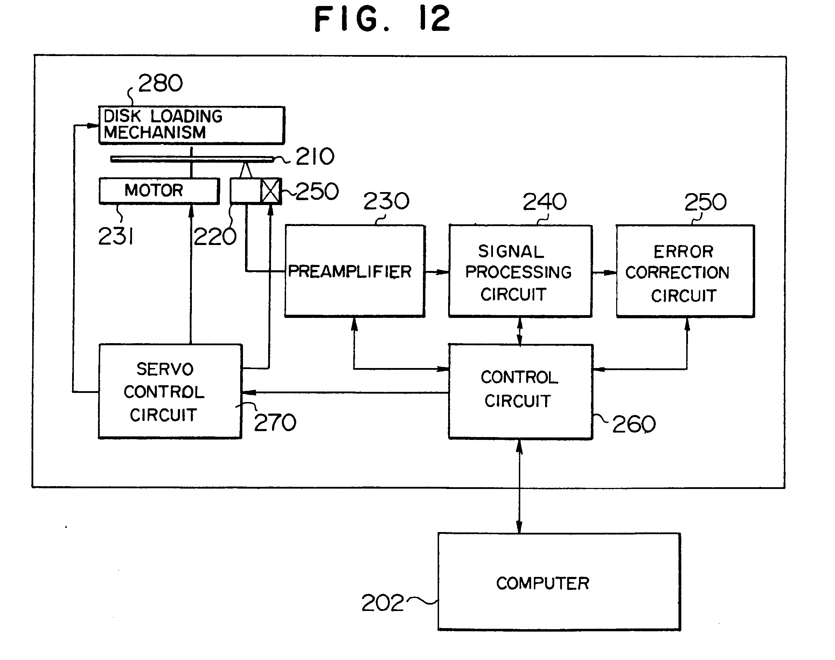

Referring to Figs. 11 and 12, a further embodiment will be explained hereunder.

An optical disk apparatus 201 is connected to an external apparatus, for example a computer 202. An optical pickup 220 irradiates a laser beam towards the optical disk 210 and outputs a signal corresponding to a reflection beam from the optical disk 210. The signal from the optical pickup 220 is amplified by a preamplifier 230 and is inputted into the computer 202 through a signal processing circuit 240, an error correction circuit 250 and a control circuit 260.

A servo control circuit 270 controls a disk driving motor 231, the pickup 220, a disk loading mechanism 280 and a pickup driving motor 290.

The control circuit 260 compares a reference level set by the external apparatus 202 with a detected level of signal from the optical pickup 220, in compliance with instructions stored in the control circuit 260 in advance (step 1101 in Fig. 11). If the detected level deteriorates to the reference level (step 1102 in Fig. 11), the control circuit 260 presents the deterioration of the detected signal level outwards (step 1103 in Fig. 11) as well as delivers information representative of the deterioration of the detected signal level to the external apparatus 202 (step 1104 in Fig. 11). As occasion demands, the control circuit 260 operates the servo control circuit 270 to carry out the above-mentioned dust removal operation on the basis of commands from the external apparatus 202 or operator's commands.

## Claims

1. An optical disk apparatus comprising:
a casing with an insertion/ejection opening (72) for receiving an optical disk (10);
means for reading out a signal recorded on a recording medium on said optical disk (10), including an optical pickup (20) having an objective (21), said read-out means being housed in said casing;
means for processing a signal from said read-out means;
a turntable (32) for rotating said optical disk;
a brush (41);
means (260, 270, 50, 27, M) for driving said objective (21) and/or said brush (41) to provide a relative sliding movement therebetween;
means (50, 81, 83) for moving the optical pickup (20) away from said turntable (32) and simultaneously moving said optical disk (10) towards said insertion/ejection opening (72);
means (260) for controlling said driving means;
a comparator (1101) for comparing the amplitude level of said read signal from said read-out means with a reference level (L_{R}), somewhat higher than the level (L_{C}) at which the read-out of information becomes impossible, and
means (270) to initiate, either internally or on command from outside, the operation of said optical pickup and optical disk moving means and said driving means when said amplitude becomes lower than said reference level (L_{R}).

## Patentansprüche

1. Gerät für optische Disketten, enthaltend:
ein Gehäuse mit einer Einsetz-/Ausstoßöffnung (72) zur Aufnahme einer optischen Diskette (10);
eine Vorrichtung zum Auslesen eines auf einem Aufzeichnungsmedium auf der optischen Scheibe (10) aufgezeichneten Signals, einschließlich eines optischen Aufnehmers (20) mit Objektiv (21), wobei die Vorrichtung zum Auslesen in dem Gehäuse untergebracht ist;
eine Vorrichtung zur Verarbeitung eines Signals von der Auslesevorrichtung;
einen Plattenteller (32) zum Rotieren der optischen Diskette;
eine Bürste (41);
eine Vorrichtung (260, 270, 50, 27, 11) zum Antreiben des Objektivs (21) und/oder der Bürste (41) zum Herbeiführen einer relativen Gleitbewegung zueinander;
eine Vorrichtung (50, 81, 83) zum Bewegen des optischen Aufnehmers (20) vom Plattenteller (32) weg und gleichzeitiger Bewegung der optischen Diskette (10) auf die Einsetz-/Ausstoßöffnung (72) hin;
eine Vorrichtung (260) zum Steuern der Antriebsvorrichtung;
einen Vergleicher (1101) zum Vergleichen des Amplitudenniveaus des Auslesesignals von der Auslesevorrichtung mit einem Bezugsniveau (L_{R}), etwas höher als das Niveau (L_{C}), bei dem das Auslesen der Information unmöglich wird, und
eine Vorrichtung (270) zur Ingangsetzung, entweder intern oder auf Befehl von außen, des Betriebs der Bewegungsvorrichtung für den optischen Aufnehmer und die optische Diskette sowie der Antriebsvorrichtung, wenn das Amplitudenniveau niedriger als das Bezugsniveau (L_{R}) wird.

## Revendications

1. Dispositif à disque optique comprenant :
un boîtier pourvu d'une ouverture d'insertion/d'éjection (72) pour recevoir un disque optique (10);
des moyens pour lire un signal enregistré sur un support d'enregistrement sur ledit disque optique (10), incluant un dispositif de détection optique (20) possédant un objectif (21), lesdits moyens de lecture étant logés dans ledit boîtier;
des moyens pour traiter un signal délivré par lesdits moyens de lecture;
un plateau rotatif (32) pour faire tourner ledit disque optique;
une brosse (41);
des moyens (260,270,50,27,M) pour entraîner ledit objectif (21) et/ou ladite brosse (41) pour obtenir un déplacement relatif de glissement entre eux;
des moyens (50,81,83) pour écarter le dispositif de détection optique (20) par rapport audit plateau rotatif (32) et déplacer simultanément ledit disque optique (10) en direction de ladite ouverture d'insertion/d'éjection (72);
des moyens (260) pour commander lesdits moyens d'entraînement;
un comparateur (1101) pour comparer le niveau d'amplitude dudit signal de lecture délivré par lesdits moyens de lecture à un niveau de référence (L_{R}), légèrement supérieur au niveau (L_{C}), auquel la lecture de l'information devient impossible; et
des moyens (270) pour déclencher, soit de façon interne, soit sur la base d'une commande provenant de l'extérieur, le fonctionnement dudit dispositif de détection optique et desdits moyens de déplacement du disque optique et desdits moyens d'entraînement lorsque ladite amplitude devient inférieure audit niveau de référence (L_{R}).
